# EUROPEAN PATENT SPECIFICATION

(11) **EP 3 251 871 B1**
(45) Date of publication and mention of the grant of the patent: **26.12.2018**
(21) Application number: 16172921.5
(22) Date of filing: 03.06.2016
(51) Int. Cl.: B60B 33/00

(54) **AN ATTACHMENT ARRANGEMENT AND A CASTER**
BEFESTIGUNGSANORDNUNG UND LAUFROLLE
DISPOSITIF DE FIXATION ET ROULETTE

(43) Date of publication of application: 06.12.2017
(73) Proprietor: Swede Wheel AB, 33033 Hillerstorp (SE)
(72) Inventor: DRAVEGÅRD, Mikael, 33033 Hillerstorp (SE)
(74) Representative: Bergenstråhle Group AB

(56) References cited:
- WO-A1-2012/001718
- DE-U1- 8 702 405
- US-A1- 2002 174 512
- US-A1- 2003 061 681

## Description

### Technical field

The present invention relates generally to an attachment arrangement for attaching a caster to an object and to a caster.

### Background art

In prior art casters are known which are designed to be mounted on to shopping carts, office chairs, material handling equipment etc. Heavy duty casters used within the industry are designed to carry heavy loads for example when mounted on heavy duty storage racks, holding bins, maintenance equipment etc. When casters are used on smooth and flat surfaces, in general they function very well. On the other hand when casters are used on rough and uneven surfaces containing cavities or irregularities of different sizes, the caster is subjected to unwanted shocks and impacts when the caster is run down into these ground cavities or irregularities. When this occurs the housing of the caster is subjected to an impact and as a consequence of this the attachment arrangement of the caster housing may become crooked and skew and the functionality of the caster is impaired and in the worst case the caster will stop functioning. One prior art example is provided by document WO 2012/001718 A1.

Generally, when higher load carrying capacities of one or multiple casters are needed, casters with larger dimension i.e. a more robust housing, larger wheel diameters and widths are chosen to provide higher load carrying capacity. A drawback with this is that a large amount of different sizes of casters need to be manufactured and kept in stock, this to be able to meet the different needed carrying capacities.

### Summary of invention

An object of the present invention is to create an attachment arrangement for attaching a caster housing to an object which attachment arrangement holds a robust design when subjected to impacts. Another object of the attachment arrangement is to increase the load carrying capacity for an attachment arrangement for an already existing design of an attachment arrangement.

The object is met by an attachment arrangement for attaching a caster housing to an object according to claim 1. The attachment arrangement according to claim 1 comprises an attachment arrangement for attaching a caster to an object, wherein the attachment arrangement comprises: a caster housing, a washer means provided with a upper contact surface, a fastening means provided to fasten the washer means and the caster housing to an object.

Further, the washer means is provided with a side contact surface and a transitional contact surface, which transitional contact surface is provided between the upper and side contact surfaces of the washer means which upper, side and transitional contact surfaces of the washer means are provided with substantially corresponding inverse shape to upper, side and transitional contact surfaces of the caster housing, and in that at least the upper and transitional contact surfaces of the washer means are provided to abut against corresponding upper and transitional contact surfaces of the caster housing in use.

The caster housing is provided with an upper cup and a lower cup, which upper and lower cups together provide the upper, side and transitional contact surfaces of the caster housing.

The upper cup is provided with an inner edge and the lower cup is provided with an inner edge, which inner edge of the upper cup is bent around the inner edge of the lower cup, which together form upper, side and transitional contact surfaces of the caster housing.

The lower cup in a vertical cross-section provide the transitional contact surface of the caster housing with an arc shaped form. At least one ball bearing is provided between the upper cup and the lower cup of the caster housing. The caster housing is provided with one ball bearing between the upper cup and a transitional cup arranged between the upper cup and the lower cup, and one ball bearing is provided between the transitional cup and the lower cup. The fastening device is a threaded screw/bolt or a rivet. In one embodiment the washer means comprises a washer and a nut, whereof the nut is provided with internal threads. In one additional embodiment the washer and a nut integrated into one unit and provided with internal threads. In one additional embodiment the washer means is a washer. Further, a caster is provided with the attachment arrangement.

### Brief description of drawings

The invention is now described, by way of example, with reference to the accompanying drawings, in which:
Fig. 1 discloses an perspective view of a caster,
Fig. 2 discloses a sectional view of an attachment arrangement according to a first embodiment of the invention,
Fig. 3 discloses an enlarged detail view of the attachment arrangement according Fig. 2,
Fig. 4 discloses a sectional view of an attachment arrangement according to a second embodiment of the invention, and
Fig. 5 discloses a sectional view of an attachment arrangement according to a third embodiment of the invention.

### Description of embodiments

In the following, a detailed description of an attachment arrangement for attaching a caster 2 to an object according to the invention is disclosed in detail in respect of embodiments and in reference to the accompanying drawings. All examples herein shall be seen as part of the general description and therefore possible to combine in any way in general terms. Again, individual features of the various embodiments may be combined or exchanged unless such combination or exchange is clearly contradictory to the overall function of the attachment arrangement.

In the description below, various directions will be given with reference to a caster mounted onto an object, which caster is provided with a wheel which is arranged to abut against and roll over a ground surface in use. Examples of such directions can be up, down, side etc.

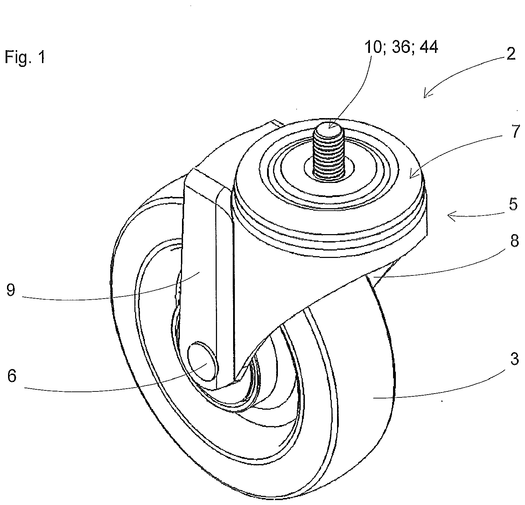

In Fig. 1 a caster 2 is disclosed. Within the description below the caster 2 is defined to comprise a caster housing 5 including the attachment arrangement (not shown) and a wheel 3. The wheel 3 is attached on the housing 5 and arranged for rotation around a horizontal wheel axle 6. The housing 5 is provided with an upper part 7 from which a first wing 8 and a second wing 9, extend downwards towards the ground, in a use position. The wheel axle 6 extend between the wings 8, 9. The wheel axle 6 extend in a horizontal direction from the first wing 8 to the second wing 9. In the upper part 7 of the housing 5 a fastening means 10, 36, 44 is provided. The fastening means 10, 36, 44 is provided to attach the caster 2 to the object alternatively to a plate which is attached to the object. The caster 2 according to the invention can for example be a rigid caster, upon which the wheel 3 is mounted to a stationary housing, or a swivel caster which allows the wheel 3 and its housing 5 to rotate freely around a vertical swivel axis. Typically a swivel caster include a small amount of offset distance between the center axis of the vertical swivel axis and the center axis of the caster wheel 3. When the caster 2 is moved and the wheel 3 is not facing the correct direction, the offset will cause the wheel assembly to rotate around the vertical swivel axis to follow behind the direction of movement. In the description below the swivel axis is constituted by the fastening means 10, 36, 44.

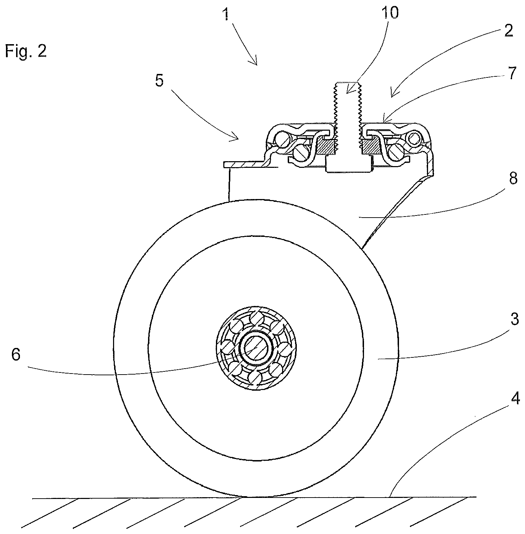

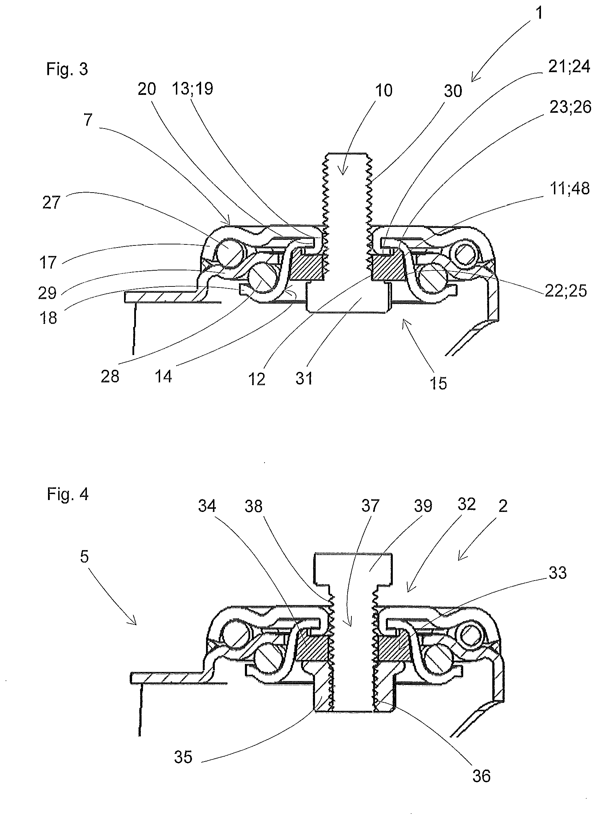

In Fig. 2 and 3 a cross-section is disclosed of a caster 2 with the attachment arrangement 1 according to a first embodiment, which attachment arrangement 1 is provided to attach the caster 2 to an object. The caster 2 shown is a swivel caster. In the upper part 7 of the housing 5 the fastening means 10 is provided. The housing 5 comprises the upper part 7 from which the two wings 8, 9 (only one shown), extend downwards towards the ground 4, in a use position. The wheel axle 6 extends between the wings 8, 9. In the upper part 7 of the housing 5 the fastening means 10 is provided.

The attachment arrangement 1 comprises the caster housing 5, a washer means 11 and fastening means 10. The washer means 11 is a separate detail which is attached to the attachment arrangement 1 by means of the fastening means 10, which also is a separate detail. In the first embodiment of the invention the washer means 11 comprises a washer 48.The fastening means 10 is provided through holes 12, 13, both through the washer means 11 and the upper part 7 of the caster housing 5. The washer means 11 is disc-shaped and the hole 12 through the washer means 11 is centrally arranged.

The caster housing 5 is provided with an indentation 14 within a lower side 15 of the upper part 7 of the housing 5, within which indentation 14 the washer means 11 is provided. The caster housing 5 is provided with an upper cup 17 and a lower cup 18, which when in an assembled state create the indentation 14. The upper cup 17 is provided with an inner edge 19 and the lower cup 18 is provided with an inner edge 20, which borders to the through hole 13 of the housing 5. The inner edge 19 of the upper cup 17 is bent around the inner edge 20 of the lower cup 18. The inner edge 20 of the upper cup 17 is bent downwards, to enclose the inner edge 20 of the lower cup 18. The bent inner edge 19 of the upper cup 17, forms a lying U-shape in cross-section, when bent around the inner edge 20 of the lower cup 18. The inner edge 20 of the lower cup 18 is substantially horizontally arranged in an assembled state. The above described shape of the indentation 14 that the upper cup 17 and lower cup 18 form together is one among many.

The indentation 14 within the lower side 15 of the upper part 7 of the housing 5 comprises upper, side and transitional contact surfaces 21, 22, 23. The transitional contact surface 23 is a connecting surface 23 provided between the upper and side contact surfaces 21, 22 of the housing 5, this to form a continuous contact surface of the housing 5. The continuous contact surface of the housing 5 comprises the upper, side and transitional contact surfaces 21, 22, 23 of the housing 5.

The washer means 11 is provided within the indentation 14 in the caster housing 5. The washer means 11 is also provided with an upper contact surface 24, a side contact surface 25, and a transitional contact surface 26. The transitional contact surface 26 of the washer means 11 is provided between the upper and side contact surfaces 24, 25 of the washer means 11, this to form a continuous contact surface of the washer means 11. The continuous contact surface of the washer means 11 comprises the upper, side and transitional contact surfaces 24, 25, 26 of the washer means 11. The continuous contact surface of the housing 5 is arranged to abut entirely or substantially entirely towards a continuous contact surface of the washer means 11, in use. The abutment between the continuous contact surfaces of washer means 11 and the housing 5 achieves a large contact area between the washer means 11 and the housing 5 which achieves a more robust design due to that the continuous contact surfaces support each other both in a horizontal and a vertical direction. The abutment between the continuous contact surfaces will stabilize the design of the attachment arrangement since providing support both in an vertical and horizontal direction, in the event that the caster is subjected to an impact when e.g. run over an ground surface with irregularities.

The upper, side and transitional contact surfaces 23, 24, 25 of the washer means 11 are provided with a substantially corresponding inverse shape, with reference to the upper, side and transitional contact surfaces 21, 22, 23 of the caster housing 5. At least the upper and transitional contact surfaces 24, 25 of the washer means 11 are provided to abut against corresponding contact surfaces 21, 22 of the caster housing 5 in an assembled state in use. The contact surfaces 21, 22, 23, 24, 25, 26 are the surfaces on the housing respectively on the washer means 11 which abut against each other, when in use.

The indentation 14 of the caster housing 5 is provided with a U-shape seen in a vertical cross-section, such that at least the upper and transitional contact surfaces 21, 23 of the housing 5 and the upper and transitional contact surfaces 24, 26 of the washer means 11 mesh with each other in an assembled state. The advantage with that the washer means 11 is in contact with the caster housing 5 across a contact area which is as large and having a substantially horizontal propagation direction as wide as possible, is that the load bearing capacity increases and that the design of the caster 1 becomes more robust. This since with increased contact surface area between the attachment arrangement 1 and the washer means 11 over which surface area the load from the object can be distributed, a higher load bearing capacity is achieved. The substantially corresponding inverse shape of the contact surfaces 21, 22, 23, 24, 25, 26 of the washer means 11 respectively the caster housing 5, leads to that few surface areas between the contact surfaces are unsupported and the load bearing capacity is thus increased, and the design of the attachment arrangement 1 will become more robust, and the areas with less or no support is limited. The fact that the load from the object which affects the caster housing 5 is supported by the major horizontal area of the washer means 11, including the transitional contact surface 26 which constitute the corners of the indentation 14 and all the way out to the side contact surface 25, result in that a higher torque can be absorbed, this since the free space between the caster housing 5 and the washer means 11 is limited.

In the case according to prior art when the washer means does not extend all the way out to the transitional contact surface and the side contact surface of the housing, the housing can collapse and deflect, this in the case when the caster is subjected to a too high load and an impact. A small tolerance deviation along the contact surfaces 21, 22, 23 of the caster housing 5 and the washer means 11 is acceptable as long as the major contact surfaces, which are the upper and transitional contact surfaces 21, 23, 24, 26, abut against each other. The side contact surfaces 25 of the washer means 11 and the caster housing 5 can also abut against each other, which abutment achieves a vertical stabilizing effect for the design of the whole attachment arrangement 1. Other shapes of the upper and transitional surfaces 21, 23, 24, 26 than the above described are also possible.

The lower cup 18 seen in a vertical cross-section is provided with an arc shaped form. The lower cup 18 is S-shaped seen in a vertical cross section, which S-shape provides the transitional contact surface 23 of the caster housing 5 with the arc-shape. Thus, also the corresponding transitional surface 26 of the washer means11 is arc-shaped.

In one additional alternative embodiment at least one first ball bearing 27 is provided between the upper cup 17 and the lower cup 18 of the caster housing 5. The ball bearing 27 achieve the swiveling property of the caster 2. In one additional alternative embodiment, an intermediate cup 29 is arranged between the upper cup 17 and the lower cup 18, and an additional second ball bearing 28 is provided between the intermediate cup 29 and the lower cup 18. The intermediate cup 29 is preferably formed in one piece with the upper part 7 and the wings 8, 9 of the caster housing 5.

The fastening means 10 is preferably a threaded screw or bolt which meshes with corresponding thread provided in the object. The threads 30 of the screw or bolt is external. The fastening means 10 can also be a rivet or any other equivalent fastening means. In the first embodiment the fastening means 10 is attached to the object from below, with its fastening head 31 arranged below the washer means 11 and in the vicinity of the wheel 3. The fastening head 31 of the fastening means 10, arranged below the washer means 11, is arranged to hold the washer means 11 in place when the attachment arrangement 1 is mounted onto an object. The washer means 11 is a separate detail which abuts against the indentation 14 and is attached to the attachment arrangement 1 by means of the fastening means 10.

Fig. 4 discloses a cross-section of a caster 2 with to a second embodiment of the attachment arrangement 32 of the invention. The attachment arrangement 32 of the second embodiment differs from the first embodiment in the design of the washer means 33. The washer means 33 comprises a washer 34 and a nut 35. The washer 34 and the nut 35 is separate parts which in use are held together by means of the fastening means 37. Further, the nut 35 is preferably provided with internal threads 36 when the fastening means 37 is a screw or bolt with external threads 38. The fastening means 37 is attached to the object from above, with its fastening head 39 arranged above the housing 5. The washer 34 is provided with a hole 12 which is provided with a smooth surface. Thus, when the fastening head 39 of the fastening means 37 is provided above the attachment arrangement 32, the external threads 38 of the fastening means 37 are fastened to the internal threads 36 of the nut 35, and the washer 34 will be held in the indentation 14 by means of the fastening means 37 and the nut 35.

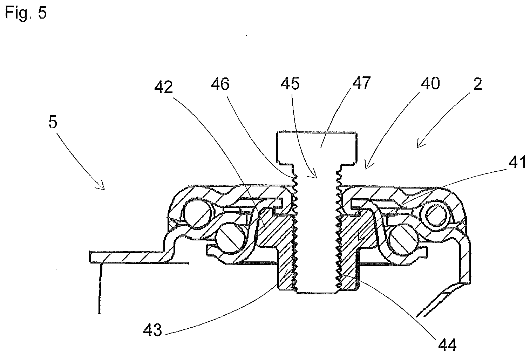

Fig. 5 discloses a cross-section of a caster 2 according to a third embodiment of the attachment arrangement 40 of the invention. The attachment arrangement 40 of the third embodiment differ from the first and second embodiments in the design of the washer means 41. The washer means 41 comprises a washer part 42 and a nut part 43. The washer part 42 and the nut part 43 are arranged as one merged part. Preferably, both the nut part 43 and the washer part 42 are provided with internal threads 44 when the fastening means 45 is a screw or bolt with external threads 46. The fastening means 45 is attached to the object from above, with its fastening head 47 arranged above the caster housing 5.

## Claims

1. An attachment arrangement (1, 32, 40) for attaching a caster (2) to an object, wherein the attachment arrangement comprises:
a caster housing (5), wherein the caster housing (5) is provided with an upper cup (17) and a lower cup (18), which upper and lower cups (17, 18) together provide upper, side and transitional contact surfaces (21, 22 ,23) of the caster housing (5) a washer means (11, 33, 41) provided with a upper contact surface (24) a fastening means (10, 37, 45) provided to fasten the washer means (11, 33, 41) and the caster housing (5) to an object, wherein the upper cup (17) is provided with an inner edge (19) and the lower cup (18) is provided with an inner edge (20), which inner edge (19) of the upper cup (17) is bent around the inner edge (19) of the lower cup (18), which together form upper, side and transitional contact surfaces (21, 22, 23) of the caster housing (5), **and in that** the washer means (11, 33, 41) is provided with a side contact surface (25) and an transitional contact surface (26), which transitional contact surface (26) is provided between the upper and side contact surfaces (24, 25) of the washer means (11, 33, 41) **characterised in that** the upper, side and transitional contact surfaces (24, 25, 26) of the washer means (11, 33, 41) are provided with substantially corresponding inverse shape to the upper, side and transitional contact surfaces (21, 22, 23) of the caster housing (5), **and in that** at least the upper and transitional contact surfaces (24, 26) of the washer means (11, 33, 41) are provided to abut against corresponding upper and transitional contact surfaces (21, 23) of the caster housing (5).

2. Attachment arrangement according to claim 1, wherein the lower cup (18) in a vertical cross-section provide the transitional contact surface (23) of the caster housing (5) with an arc shaped form.

3. Attachment arrangement according to any of claims 1-2, wherein at least one first ball bearing (27) is provided between the upper cup (17) and the lower cup (18) of the caster housing (5).

4. Attachment arrangement according to any of claims 1-3, wherein the caster housing (5) is provided with one first ball bearing (27) between the upper cup (17) and an intermediate cup (29) arranged between the upper cup (17) and the lower cup (18), and one second ball bearing (28) is provided between the intermediate cup (29) and the lower cup (18).

5. Attachment arrangement according to any of claims 1-4, wherein the fastening means (10, 37, 45) is a threaded screw/bolt or a rivet.

6. Attachment arrangement according to any of claims 1-5, wherein the washer means (33) comprises a washer (34) and a nut (35), whereof which the nut (35) is provided with internal threads (36).

7. Attachment arrangement according to any of claims 1-5, wherein the washer means (41) comprises a washer part (42) and a nut part (43) integrated into one unit and provided with internal threads (44).

8. Attachment arrangement according to any of claims 1-5, wherein the washer means (11) is a washer (48).

9. A caster comprising the attachment arrangement according to claims 1-8.

## Patentansprüche

1. Befestigungsanordnung (1, 32, 40) zum Anbringen einer Laufrolle (2) an einem Objekt, wobei die Anbringungsanordnung Folgendes umfasst:
ein Laufrollengehäuse (5), wobei das Laufrollengehäuse (5) mit einer oberen Schale (17) und einer unteren Schale (18) bereitgestellt ist, wobei die obere und die untere Schale (17, 18) zusammen eine obere, eine seitliche und eine Übergangs-Kontaktfläche (21, 22, 23) des Laufrollengehäuses (5) bereitstellen,
ein Unterlegscheibenmittel (11, 33, 41), das mit einer oberen Kontaktfläche (24) bereitgestellt ist,
ein Befestigungsmittel (10, 37, 45), das dazu bereitgestellt ist, das Unterlegscheibenmittel (11, 33, 41) und das Laufrollengehäuse (5) an einem Objekt zu befestigen,
wobei die obere Schale (17) mit einer Innenkante (19) bereitgestellt ist und die untere Schale (18) mit einer Innenkante (20) bereitgestellt ist, wobei die Innenkante (19) der oberen Schale (17) um die Innenkante (19) der unteren Schale (18) gebogen ist, die zusammen eine obere, eine seitliche und eine Übergangs-Kontaktfläche (21, 22, 23) des Laufrollengehäuses (5) ausbilden, und wobei das Unterlegscheibenmittel (11, 33, 41) mit einer seitlichen Kontaktfläche (25) und einer Übergangs-Kontaktfläche (26) bereitgestellt ist, wobei die Übergangs-Kontaktfläche (26) zwischen der oberen und der seitlichen Kontaktfläche (24, 25) des Unterlegscheibenmittels (11, 33, 41) bereitgestellt ist, **dadurch gekennzeichnet, dass** die obere, die seitliche und die Übergangs-Kontaktfläche (24, 25, 26) des Unterlegscheibenmittels (11, 33, 41) mit der oberen, der seitlichen und Übergangs-Kontaktfläche (21, 22, 23) des Laufrollengehäuses (5) im Wesentlichen entsprechender inverser Form bereitgestellt sind, und dadurch, dass zumindest die obere und die Übergangs-Kontaktfläche (24, 26) des Unterlegscheibenmittels (11, 33, 41) dazu bereitgestellt sind, an einer entsprechenden oberen und Übergangs-Kontaktfläche (21, 23) des Laufrollengehäuses (5) anzuliegen.

2. Anbringungsanordnung nach Anspruch 1, wobei die untere Schale (18) in einem vertikalen Querschnitt die Übergangs-Kontaktfläche (23) des Laufrollengehäuses (5) mit einer bogenförmigen Form bereitstellt.

3. Anbringungsanordnung nach einem der Ansprüche 1 - 2, wobei zwischen der oberen Schale (17) und der unteren Schale (18) des Laufrollengehäuses (5) zumindest ein erstes Kugellager (27) bereitgestellt ist.

4. Anbringungsanordnung nach einem der Ansprüche 1-3, wobei das Laufrollengehäuse (5) mit einem ersten Kugellager (27) zwischen der oberen Schale (17) und einer zwischen der oberen Schale (17) und der unteren Schale (18) angeordneten Zwischenschale (29) bereitgestellt ist und ein zweites Kugellager (28) zwischen der Zwischenschale (29) und der unteren Schale (18) bereitgestellt ist.

5. Anbringungsanordnung nach einem der Ansprüche 1-4, wobei das Befestigungsmittel (10, 37, 45) eine Gewindeschraube/ein Gewindebolzen oder ein Niet ist.

6. Anbringungsanordnung nach einem der Ansprüche 1-5, wobei das Unterlegscheibenmittel (33) eine Unterlegscheibe (34) und eine Mutter (35) umfasst, wobei die Mutter (35) mit Innengewinde (36) bereitgestellt ist.

7. Anbringungsanordnung nach einem der Ansprüche 1-5, wobei das Unterlegscheibenmittel (41) einen Unterlegscheibenteil (42) und einen Mutterteil (43) umfasst, die zu einer Einheit integriert und mit Innengewinde (44) bereitgestellt sind.

8. Anbringungsanordnung nach einem der Ansprüche 1-5, wobei das Unterlegscheibenmittel (11) eine Unterlegscheibe (48) ist.

9. Laufrolle, umfassend die Anbringungsanordnung nach Anspruch 1-8.

## Revendications

1. Dispositif de fixation (1, 32, 40) pour fixer une roulette (2) à un objet, le dispositif de fixation comprenant :
un carter de roulette (5), le carter de roulette (5) comprenant une coupelle supérieure (17) et une coupelle inférieure (18), lesdites coupelles supérieure et inférieure (17, 18) formant ensemble des surfaces de contact supérieure, latérale et transitoire (21, 22, 23) du carter de roulette (5)
un moyen rondelle (11, 33, 41) comprenant une surface de contact supérieure (24)
un moyen de fixation (10, 37, 45) fourni pour fixer le moyen rondelle (11, 33, 41) et le carter de roulette (5) à un objet,
la coupelle supérieure (17) comprenant un bord intérieur (19) et la coupelle inférieure (18) comprenant un bord intérieur (20), ledit bord intérieur (19) de la coupelle supérieure (17) étant plié autour du bord intérieur (19) de la coupelle inférieure (18), qui forment ensemble des surfaces de contact supérieure, latérale et transitoire (21, 22, 23) du carter de roulette (5), et le moyen rondelle (11, 33, 41) comprenant une surface de contact latérale (25) et une surface de contact transitoire (26), ladite surface de contact transitoire (26) étant située entre les surfaces de contact supérieure et latérale (24, 25) du moyen rondelle (11, 33, 41),
**caractérisé en ce que** les surfaces de contact supérieure, latérale et transitoire (24, 25, 26) du moyen rondelle (11, 33, 41) ont une forme inversée correspondant sensiblement aux surfaces de contact supérieure, latérale et transitoire (21, 22, 23) du carter de roulette (5), et **en ce qu'**au moins les surfaces de contact supérieure et transitoire (24, 26) du moyen rondelle (11, 33, 41) sont fournies pour venir en butée contre des surfaces de contact supérieure et transitoire (21, 23) correspondantes du carter de roulette (5).

2. Dispositif de fixation selon la revendication 1, la coupelle inférieure (18) dans une section transversale verticale donnant une forme en arc à la surface de contact transitoire (23) du carter de roulette (5).

3. Dispositif de fixation selon la revendication 1 ou 2, au moins un premier roulement à billes (27) étant disposé entre la coupelle supérieure (17) et la coupelle inférieure (18) du carter de roulette (5).

4. Dispositif de fixation selon l'une quelconque des revendications 1 à 3, le carter de roulette (5) comprenant un premier roulement à billes (27) entre la coupelle supérieure (17) et une coupelle intermédiaire (29) disposée entre la coupelle supérieure (17) et la coupelle inférieure (18), et un second roulement à billes (28) étant fourni entre la coupelle intermédiaire (29) et la coupelle inférieure (18).

5. Dispositif de fixation selon l'une quelconque des revendications 1 à 4, le moyen de fixation (10, 37, 45) étant une vis/un boulon fileté ou un rivet.

6. Dispositif de fixation selon l'une quelconque des revendications 1 à 5, le moyen rondelle (33) comprenant une rondelle (34) et un écrou (35), l'écrou (35) comprenant des filets internes (36).

7. Dispositif de fixation selon l'une quelconque des revendications 1 à 5, le moyen rondelle (41) comprenant une partie rondelle (42) et une partie écrou (43) intégrées dans une unité et comprenant des filets internes (44) .

8. Dispositif de fixation selon l'une quelconque des revendications 1 à 5, le moyen rondelle (11) étant une rondelle (48).

9. Roulette comprenant le dispositif de fixation selon les revendications 1 à 8.
